## Europäisches Patentamt
## European Patent Office
## Office européen des brevets

(19)

(11) Publication number: **0 032 460**
**B1**

# EUROPEAN PATENT SPECIFICATION

(12)

(45) Date of publication of patent specification: **12.09.84**

(21) Application number: **81300161.7**

(22) Date of filing: **14.01.81**

(51) Int. Cl.³: **G 01 G 19/22, A 23 G 9/22, B 01 F 3/12**

(54) Apparatus for weighing and mixing liquid and powder media.

(30) Priority: **15.01.80 SE 8000308**

(43) Date of publication of application:
**22.07.81 Bulletin 81/29**

(45) Publication of the grant of the patent:
**12.09.84 Bulletin 84/37**

(84) Designated Contracting States:
**BE DE FR GB NL**

(56) References cited:
**DE-A-1 923 638**
**FR-A-1 563 562**
**FR-A-2 416 717**
**GB-A-1 051 935**
**GB-A-2 010 106**
**US-A-3 425 501**

(73) Proprietor: **ALFA-LAVAL AB**
**Box 500**
**S-147 00 Tumba (SE)**

(72) Inventor: **Svensson, Sven Hilding**
**Mantalskroken 12**
**S-222 47 Lund (SE)**

(74) Representative: **Simpson, Ronald Duncan Innes et al**
**A.A.Thornton & Co. Northumberland House**
**303-306 High Holborn**
**London WCIV 7LE (GB)**

Courier Press, Leamington Spa, England.

## Description

The invention relates to an apparatus for weighing out powder and liquid media and mixing the powder in the liquid. Such apparatus is used in many different fields, such as in the food industry where the apparatus can be used, for exmaple, in the production of ice-cream.

A known weighing and mixing apparatus for liquid and powder media comprises two weighing receptacles, each of which is suspended in a weighing machine, and a mixing receptacle. One of the weighing receptacles is arranged to receive and weigh out different liquid ingredients supplied in proper order, after which the ingredients are emptied into the mixing receptacle. The other weighing receptacle is arranged to receive and weigh out powdered ingredients in a similar way. Then the powder ingredients are emptied into the mixing receptacle, where they are mixed with the liquid ingredients by means of an agitator.

This known apparatus has the drawbacks that it requires three receptacles and two weighing machines, and the mixing of the ingredients in the mixing receptacle with the agitator can be incomplete.

In patent specification FR—A—1563562 there is described a weighing and mixing apparatus in which a mixing receptacle is supported on a weighing machine and liquid and powder are delivered into the top of the receptacle until the total weight reaches a predetermined value. The powder and liquid are mixed by stirring in the receptacle. The powder is delivered from a hopper at a rate determined by a metering device, but with this apparatus it is difficult to control accurately the relative weights of the powder and liquid making up the total weight since it is not possible to determine the weights separately. Another drawback of this apparatus arises because the powder is delivered at the top and falls down into the receptacle. Vapour can rise from the liquid, especially if it is hot, and moisten the powder in the delivery duct so that the supply of powder is disturbed or even interrupted.

Patent Specification GB—A—1051935 refers to an apparatus for preparing clay and/or bentonite containing suspensions of required density. Due to difficulties presented by these materials suspension contained in a receptacle is withdrawn from and recycled through a pump to the receptacle and the clay and/or bentonite is supplied via a feed funnel connected to the pipeline connecting the discharge side of the · pump to the receptacle. The apparatus does not include any weighing means and the supply of clay/bentonite is terminated when the required density, determined by hydrometer testing, has been attained. This apparatus is not suitable for mixing a powder and a liquid when they are to be mixed with a given weight ratio. Furthermore, since the feed funnel for clay/bentonite is connected to the pipeline on the discharge side of the pump the apparatus would not be satisfactory for powders since the liquid or its vapour could moisten the powder in the funnel and cause it to become blocked.

The aim of the present invention is to provide a simple arrangement which avoids the disadvantages of the prior art but is also able to achieve an improved mixing of the ingredients.

According to the invention there is provided apparatus for weighing and mixing powder and liquid media, comprising a weighing machine, a first receptacle ror receiving the liquid, and a second receptacle for receiving the powder, characterised in that the weighing machine supports an assembly including the first receptacle, the second receptacle, a pump, first conduit means connecting an outlet of the first receptacle with the suction conduit of the pump, second conduit means connecting an outlet of said second receptacle with the suction conduit of the pump, and return conduit means connecting the outlet of the pump with the first receptacle.

This apparatus is substantially simplified insofar as it requires only one weighing machine and two receptacles. As all powder is compelled to pass through the pump, which is pumping the liquid, all the powder will come in intimate contact with the liquid and the mixing of the powder in the liquid is promoted.

The pump is preferably of dynamic type, which treats the powder more leniently than a displacement pump having narrow valve passages, where the powder can get stuck and form lumps. A centrifugal pump is especially suitable since it ensures a good circulation of liquid through the unit even when the flow resistance is high.

The assembly supported by the weighing machine may comprise a device for thermal treatment of the liquid, this device being included in the return conduit means between the outlet of the pump and the first receptacle. This allows the mixture of powder and liquid to be treated thermally before it is finally discharged from the first receptacle.

It is preferred that liquid supply means for supplying liquid to the assembly be connected to the suction conduit of the pump so that the liquid will be sucked into the assembly and further pumps for feeding liquid to the assembly may not be needed. Also, when the apparatus includes a device for thermal treatment of the liquid, as mentioned above, freshly supplied liquid can be thermally treated before it is mixed with the other indredients in the first receptacle.

The apparatus may additionally comprise means for further mixing of the powder in the liquid, this means being arranged between the pump and the first receptacle. Preferably the mixing means is located at the outlet of the return conduit means. The additional mixing means makes it possible to improve the mixing of the powder in the liquid should this become necessary.

Means may be provided to sense the powder level in the second receptacle and prevent withdrawal of powder if the powder level falls to a predetermined minimum level. In this way it is possible to prevent air being sucked into the suction conduit, which can cause foaming in the first receptacle. Further means may be provided to sense the powder level and prevent the supply of further powder if the level rises to a predetermined maximum level, so that there is no danger of the receptacle overflowing.

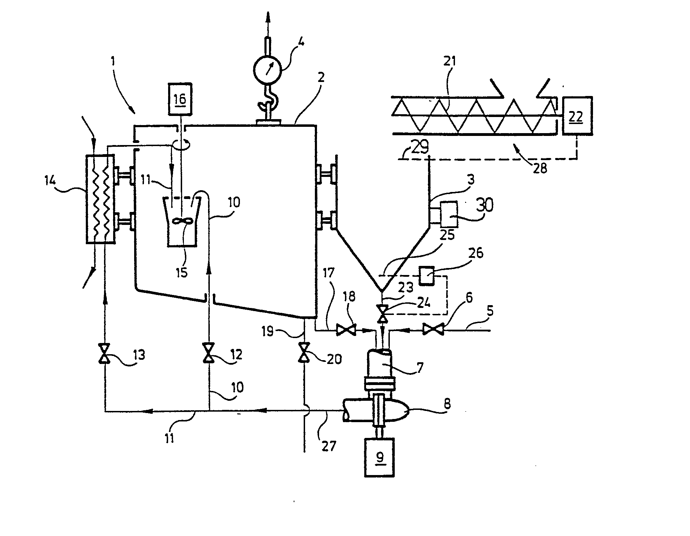

A better understanding of the invention will be had from the following detailed description which is given with reference to the accompanying drawing which shows a schematic representation of an apparatus according to the invention.

In the drawing there is shown an assembly 1 which is suspended in a weighing machine. The assembly comprises a first receptacle 2 (hereinafter called the liquid receptacle) and a second receptacle 3 (hereinafter called the powder receptacle) rigidly connected to each other.

The liquid receptacle 2 is supplied liquid, which constitutes an ingredient of the mixture to be produced, through a conduit 5, which includes a shut-off valve 6. The liquid is introduced into the suction conduit 7 of a centrifugal pump 8, which is driven by a motor 9. From the pump 8 the liquid is pumped towards the receptacle 2 through a return conduit 27, which includes two branch conduits 10 and 11 provided with respective shut-off valves 12 and 13.

The conduit 11 includes a heat exchanger 14 for thermal treatment of liquid which flows through the conduit 11 before this liquid is fed into the receptacle 2.

Both conduits 10 and 11 have outlets in the receptacle 2 above a mixing means 15 which can be employed, if required, to agitate the liquid before it is discharged into the receptacle 2. The mixing means 15 is driven by a motor 16. The receptacle 2 is connected to the suction conduit 7 of the pump 8 by a conduit 17, which is provided with a shut-off valve 18 and a conduit 19 having a shut-off valve 20 provided for emptying the receptacle 2.

The powder receptacle 3 is supplied with a powder by a screw feeder 28 having its feed screw 21 driven by a motor 22. The powder is fed into the receptacle 3, from which it is sucked through a conduit 23 including a shut-off valve 24 into the suction conduit 7 and the pump 8 to be mixed with the liquid therein. The pump 8 is so arranged that the pressure in the suction conduit 7 is lower than the pressure which prevails in the receptacle 3 to ensure that the powder is sucked into the suction conduit 7 and liquid flowing through the suction conduit does not flow up into the receptacle 3. The receptacle 3 is provided with a sensor 25 which senses if the powder level in the receptacle 3 falls below a predetermined minimum level and provides a signal to control device 26 which operates to close the valve 24. In this way the risk of ambient air entering the suction conduit 7 from the receptacle 3 and forming a foam with the liquid is avoided. Furthermore a second sensor 29 is arranged in the receptacle 3 to sense if the powder level in the receptacle 3 rises above a predetermined maximum level, above which there is a risk that the powder will flood over the receptacle. The sensor 29 is connected to the motor 22 for stopping the feed screw 21 if the maximum level is exceeded. A vibrator 30 is arranged on the receptacle 3 for promoting the discharging of powder from the receptacle.

In operation, the whole assembly 1, empty of liquid and powder, is first weighed, this assembly comprising all the parts shown in the drawing except the powder feeding means 28 with the feed screw 21 and the motor 22. A liquid ingredient of the liquid mixture to be produced is then supplied through the conduit 5 and is pumped into the liquid receptacle 2 by the pump 8, during which at least the valves 18, 20 and 24 are closed. When the weighing machine 4 shows that the desired quantity of the liquid ingredient has been supplied to the unit, the vale 6 is closed.

The valve 18 is then opened so that the liquid in the receptacle 2 is brought to circulate through the pump 8, and a negative pressure is generated in the suction conduit 7.

The feed screw 21 of the screw feeder 28 is brought into operation, so that powder is fed down into the receptacle 3. The sensor 29 prevents over-filling of the receptacle 3.

The valve 24 is opened and powder is sucked into the liquid and becomes mixed in the liquid in the pump 8, from which the liquid is pumped back to the receptacle 2 ready to flow through the pump 8 again and suck in more powder from the receptacle 3. When the weighing machine 4 shows that the desired quantity of powder has been fed down into the receptacle 3, the screw 21 is stopped. The sensor 25 senses when the powder level has reached the said lowest level and gives then a signal to the control device 26 to close the valve 24.

In many cases a satisfactory distribution and mixing of the powder in the liquid is accomplished solely by the pump 8, and the agitator mixing means 15 need not be used. In those cases where the pump 8 is insufficient to bring about the required mixing of the powder in the liquid the means 15 is, however, brought into operation to improve the mixing of the powder in the liquid.

Further liquid and/or powder can be supplied as required, to be weighed and be mixed. One can, of course, if preferred, firsty supply and weigh out all the liquid ingredients, and only then supply, weigh and admix all the powder ingredients.

Before powder is supplied to the suction conduit 7, however, it is essential to supply a liquid ingredient as liquid must flow through the suction conduit 7 in order to suck the powder out of the receptacle 3.

The liquid can be thermally treated in the unit by the heat exchanger 14. To divert the liquid to flow through the heat exchanger 14 the valve 13 is opened and the valve 12 closed.

## Claims

1. Apparatus for weighing and mixing powder and liquid media, comprising a weighing machine (4), a first receptacle (2) for receiving the liquid, and a second receptacle (3) for receiving the powder, characterised in that the weighing machine (4) suppports an assembly (1) including the first receptacle (2), the second receptacle (3), a pump (8), first conduit means (17) connecting an outlet of the first receptacle with the suction conduit (7) of the pump (8), second conduit means (23) connecting an outlet of said second receptacle (3) with the suction conduit (7) of the pump (8), and return conduit means (27, 10, 11) connecting the outlet of the pump (8) with the first receptacle (2).

2. Apparatus according to claim 1, wherein the pump (8) is of dynamic type.

3. Apparatus according to claim 2, wherein the pump is a centrifugal pump (8).

4. Apparatus according to claim 1, 2 or 3, wherein said assembly (1) comprises a device (14) for thermal treatment of the liquid, said device (14) being included in the return conduit means between the outlet of the pump (8) and the first receptacle (2).

5. Apparatus according to any one of the preceding claims, wherein liquid supply means (5, 6) is connected to the suction conduit (7) of the pump for supplying liquid to the assembly (1).

6. Apparatus according to any one of the preceding claims, wherein the assembly (1) includes mixing means (15) arranged between the pump (8) and the first receptacle for further mixing of the powder in the liquid.

7. Apparatus according to claim 6, wherein said mixing means (15) is located at the outlet of the return conduit means (10, 11, 27).

8. Apparatus according to any one of the preceding claims, wherein means (25, 26) is provided for sensing the level of powder in the second receptacle and preventing withdrawal of powder from the receptacle when the powder level reaches a predetermined minimum value.

9. Apparatus according to any one of the preceding claims, wherein means (29) is provided for sensing the level of powder in the second receptacle and preventing supply of further powder to the receptacle when the powder level rises to a predetermined value.

## Revendications

1. Appareil pour peser et mélanger des matières liquides et pulvérulentes, comprenant une machine de pesage (4), un premier récipient (2) destiné à recevoir le liquide, et un second récipient (3) destiné à recevoir la poudre, caractérisé en ce que la machine de pesage (4) supporte un ensemble (1) comprenant le premier récipient (2), le second récipient (3), une pompe (8), un premier conduit (17) reliant une sortie du premier récipient au conduit d'aspiration (7) de la pompe (8), un second conduit (23) reliant une sortie du second récipient (3) au conduit d'aspiration (7) de la pompe (8), et des moyens formant conduit de retour (27, 10, 11) reliant la sortie de la pumpe (8) au premier récipient (2).

2. Appareil selon la revendication 1, dans lequel la pompe (8) est de type dynamique.

3. Appareil selon la revendication 2, dans lequel la pompe est une pompe centrifuge (8).

4. Appareil selon la revendication 1, 2 ou 3, dans lequel ledit ensemble (1) comprend un dispositif (14) de traitement thermique du liquide, le dispositif (14) étant inclus dans les moyens formant conduit de retour, entre la sortie de la pompe (8) et le premier récipient (2).

5. Appareil selon l'une quelconque des revendications précédentes, dans lequel des moyens d'alimentation en liquide (5, 6) sont reliés au conduit d'aspiration (7) de la pompe pour fournir du liquide à l'ensemble (1).

6. Appareil selon l'une quelconque des revendications précédentes, dans lequel l'ensemble (1) comprend un moyen de mélange (15) disposé entre la pompe (8) et le premier récipient, pour mélanger davantage la poudre dans le liquide.

7. Appareil selon la revendication 6, dans lequel le moyen de mélange (15) est situé à la sortie des moyens formant conduit de retour (10, 11, 27).

8. Appareil selon l'une quelconque des revendications précédentes, dans lequel des moyens (25, 26) sont prévus pour détecter le niveau de poudre dans le second récipient et empêcher que de la poudre soit retirée du récipient lorsque le niveau de poudre atteint une valeur minimale prédéterminée.

9. Appareil selon l'une quelconque des revendications précédentes dans lequel des moyens (29) sont prévus pour détecter le niveau de poudre dans le second récipient et empêcher la fourniture de poudre supplémentaire au second récipient lorsque le niveau de poudre monte jusqu'à un niveau prédéterminé.

## Patentansprüche

1. Vorrichtung zum Wiegen und Mischen von Pulvern mit Flüssigkeiten, mit einer Wiegemaschine (4), einem ersten Behälter (2) zur Aufnahme der Flüssigkeit und einem zweiten Behälter (3) zur Aufnahme des Pulvers, dadurch gekennzeichnet, daß die Wiegemaschine (4) eine Anordnung (1) trägt, die den ersten Behälter (2), den zweiten Behälter (3), eine Pumpe (8), eine erste Leitung (17), die den Auslaß des ersten Behälters mit der Saugleitung (7) der Pumpe (8) verbindet, eine zweite Leitung (23), die den Auslaß des sweiten Behälters (3) mit der Saugleitung (7) der Pumpe (8) verbindet, sowie eine Rückleitung (27, 10, 11) aufweist, die den Auslaß des zweiten Behälters (3) mit Behälter (2) verbindet.

2. Vorrichtung nach Anspruch 1, bei der die Pumpe (8) dine dynamische Pumpe ist.

3. Vorrichtung nach Anspruch 2, bei der die Pumpe eine Zentrifugalpumpe ist.

4. Vorrichtung nach anspruch 1, 2 oder 3, bei der die Anordnung (1) eine Vorrichtung (14) zur Wärmebehandlung der Flüssigkeit enthält, die in die Rückleitung zwischen dem Auslaß der Pumpe (8) eine dynamische Pumpe ist.

5. Vorrichtung nach einem der vorgehenden Ansprüche, bei der an die Saugleitung (7) der Pumpe eine Flüssigkeitszufuhreinrichtung (5, 6) angeschlossen ist, um der Anordnung (1) Flüssigkeit zuzuführen.

6. Vorrichtung nach einem der vorgehenden Ansprüche, bei der die anordnung (1) eine Mischeinrichtung (15) aufweist, die zwischen die Pumpe (8) und den ersten Behälter eingefügt ist, um das Pulver weiter in die Flüssigkeit einzumischen.

7. Vorrichtung nach Anspruch 6, bei der die Mischeinrichtung (15) sich am Auslaß der Rückleitung (10, 11, 27) befindet.

8. Vorrichtung nach einem der vorgehenden Ansprüche, bei der eine Einrichtung (25, 26) vorgesehen ist, um die Füllhöhe des Pulvers im zweiten Behälter zu erfassen und eine Pulverentnahme aus dem Behälter zu verhindern, wenn die Füllhöhe ein vorbestimmtes Minimum erreicht hat.

9. Vorrichtung nach einem der vorgehenden Ansprüche, bei der eine Einrichtung (29) vorgesehen ist, um die Füllhöhe des Pulvers im zweiten Behälter zu ermitteln und eine weitere Pulverzufuhr zum Behälter zu verhindern, wenn die Füllhöhe einen vorbestimmten Wert erreicht hat.

0 032 460

1